# EUROPEAN PATENT SPECIFICATION

(11) **EP 4 578 735 B1**
(45) Date of publication and mention of the grant of the patent: **04.11.2026**
(21) Application number: 24215701.4
(22) Date of filing: 27.11.2024
(51) Int. Cl.: B60Q 1/50

(54) **INDUSTRIAL VEHICLE AND IMAGE PROJECTION METHOD**
NUTZFAHRZEUG UND BILDPROJEKTIONSVERFAHREN
VÉHICULE INDUSTRIEL ET PROCÉDÉ DE PROJECTION D'IMAGE

(30) Priority: 25.12.2023 JP 2023217908
(43) Date of publication of application: 02.07.2025
(73) Proprietor: KABUSHIKI KAISHA TOYOTA JIDOSHOKKI, Kariya-shi, Aichi-ken, 448-8671 (JP)
(72) Inventor: YAKUSHI, Tadayuki, Kariya-shi, Aichi, 448-8671 (JP)
(74) Representative: TBK

(56) References cited:
- EP-B1- 2 700 612
- WO-A1-2020/045040
- WO-A1-2023/085000
- JP-A- 2018 149 820
- US-A1- 2017 203 685

## Description

### TECHNICAL FIELD

The present invention relates to an industrial vehicle and an image projection method.

### BACKGROUND

Conventionally, there is known a technique of projecting an image from a vehicle onto a surrounding road surface and notifying the surroundings of the presence, a traveling direction, and the like of the vehicle. For example, in a vehicle described in Japanese Unexamined Patent Publication No. JP 2022-186340 A, an information processing device predicts a course of the vehicle on the basis of navigation-related information, and projects an image related to the predicted course onto a road surface in front of the vehicle. In addition, for example, in a vehicle described in Japanese Unexamined Patent Publication No. JP 2014-013524 A, a vehicle notification device predicts a traveling route of the own vehicle, and draws a figure that urges a pedestrian around the traveling route to prohibit entry into the traveling route.

### SUMMARY

As display information to be projected around a vehicle, various patterns such as characters, arrows, and figures that mean warnings and the like are assumed. Such projection of the display information is considered to be a very useful technique even in an industrial vehicle that transports a cargo or the like while workers come and go. However, when the display information projected onto the road surface moves along with the travel of the vehicle, the display information moves on the road surface when viewed from a person (pedestrian or the like) around the vehicle, which may cause a problem that it is difficult to recognize the display information.
Document EP 2 700 612 B1 discloses an industrial truck comprising a warning device. The warning device has a light effect projected on a road, and is mounted on the industrial truck. The light effect forms a direction indication in the direction of the truck. The light effect is formed in an arrow-shape and has arrowhead on the truck. The light effect may move in a direction opposite to the travelling direction of the truck.
Document US 2017 203685 A1 discloses a road surface illumination apparatus which is configured so as to include a vehicle motion predictor to predict the motion which a vehicle is going to perform from now on in accordance with vehicle information acquired by a vehicle information acquisition unit, and a light animation setting unit to set a light animation expressing the motion predicted by the vehicle motion predictor, and to cause an illumination device to illuminate a road surface with the animation before the vehicle performs the motion, so as to notify the motion which the vehicle is going to perform from now on to persons outside the vehicle.

The present invention has been made to solve the above problem, and an object of the present invention is to provide an industrial vehicle and an image projection method capable of projecting, onto a road surface, display information easily recognized by a person around the vehicle.

This object is achieved by an industrial vehicle according to claim 1. Furthermore, an image projection method according to claim 7 is provided. Advantageous further developments are as set forth in the dependent claims.

According to the invention, an industrial vehicle includes a detection unit configured to detect a traveling direction and a traveling speed of the own vehicle; a generation unit configured to generate an animation image in which display information moves at the traveling speed in a direction opposite to the traveling direction; and a projection unit configured to project the animation image onto a predetermined projection area on a road surface around the own vehicle. The display information appears to be fixed to the road surface.

In this industrial vehicle, the animation image in which the display information moves at the traveling speed of the own vehicle in the direction opposite to the traveling direction of the own vehicle is projected onto the predetermined projection area on the road surface around the own vehicle. As a result, to a person around the own vehicle, the display information appears to be fixed to the road surface in the projection area where the animation image is projected. Therefore, in this industrial vehicle, the display information that is easily recognized by the person around the vehicle can be projected onto the road surface.

Advantageously, the projection unit projects the animation image onto the road surface in the traveling direction. As a result, it is possible to more effectively call attention to the travel of the vehicle to the person around the own vehicle.

Advantageously, the generation unit generates the animation image such that transparency of the display information at an end in the traveling direction increases toward the end. In this case, since the display information gradually appears and gradually disappears in the projection area, it is possible to reduce a sense of discomfort when the person around the vehicle sees the display information projected onto the road surface.

Advantageously, the projection unit sets the projection area such that the animation image is projected longer in the traveling direction as the traveling speed increases. In this case, since the display information is displayed long in the traveling direction according to the traveling speed of the own vehicle, it is possible to more effectively call attention to the travel of the vehicle to the person around the own vehicle.

Advantageously, the generation unit generates the animation image including character information as the display information. In this case, it is possible to directly call attention to the travel of the vehicle to the person around the own vehicle by the character information.

Advantageously, the industrial vehicle includes a human sensor configured to sense presence of a person around the own vehicle, in which the generation unit generates the animation image in which the display information is emphasized when the human sensor senses the presence of the person. In this case, it is possible to further effectively call attention to the travel of the vehicle to the person present around the own vehicle.

The invention also relates to an image projection method including: a detection step of detecting a traveling direction and a traveling speed of an own vehicle; a generation step of generating an animation image in which display information moves at the traveling speed in a direction opposite to the traveling direction; and a projection step of projecting the animation image onto a predetermined projection area on a road surface around the own vehicle. The display information appears to be fixed to the road surface.

In this image projection method, the animation image in which the display information moves at the traveling speed of the own vehicle in the direction opposite to the traveling direction of the own vehicle is projected onto the predetermined projection area on the road surface around the own vehicle. As a result, to a person around the own vehicle, the display information appears to be fixed to the road surface in the projection area where the animation image is projected. Therefore, in this image projection method, the display information that is easily recognized by the person around the vehicle can be projected onto the road surface.

### BRIEF DESCRIPTION OF THE DRAWINGS

FIG. 1 is a schematic side view illustrating a configuration of an industrial vehicle according to one embodiment of the present invention;
FIG. 2 is a block diagram illustrating functional components of the industrial vehicle illustrated in FIG. 1;
FIG. 3 is a diagram illustrating an example of an animation image generated by a generation unit;
FIG. 4 is a diagram illustrating an example of projection of the animation image in a projection area;
FIG. 5 is a diagram illustrating another example of projection of the animation image in the projection area;
FIG. 6 is a flowchart illustrating an image projection method according to one embodiment;
FIG. 7 is a diagram illustrating another example of setting of the projection area;
FIG. 8 is a diagram illustrating further another example of setting of the projection area;
FIG. 9A is a diagram illustrating another example of the animation image;
FIG. 9B is a diagram illustrating another example of the animation image;
FIG. 9C is a diagram illustrating another example of the animation image; and
FIG. 10 is a block diagram illustrating functional components of an industrial vehicle according to a modification.

### DETAILED DESCRIPTION

Hereinafter, preferred embodiments of an industrial vehicle and an image projection method according to one aspect of the present invention will be described in detail with reference to the drawings.

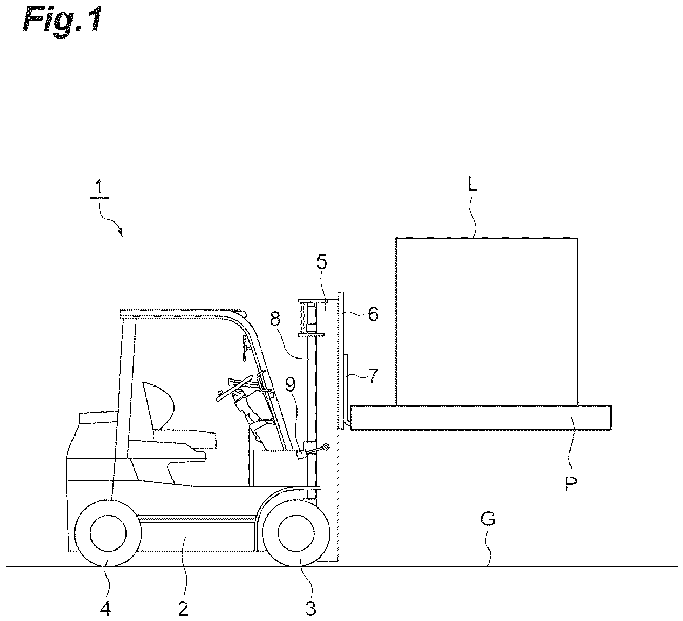

FIG. 1 is a schematic side view illustrating a configuration of an industrial vehicle according to one embodiment. In the present embodiment, as illustrated in FIG. 1, a forklift 1 is exemplified as an industrial vehicle. The forklift 1 may be either a manually driven vehicle or an automatically driven vehicle. The forklift 1 is, for example, a counter type forklift. For example, the forklift 1 picks up a pallet P on which a cargo L is placed from a cargo bed of a truck or the like, and travels to a predetermined unloading position while holding the pallet P with forks 7.

The forklift 1 includes a vehicle body 2, a pair of left and right front wheels 3 disposed at a front portion of the vehicle body 2, a pair of left and right rear wheels 4 disposed at a rear portion of the vehicle body 2, a mast 5 attached to a front end portion of the vehicle body 2, the pair of left and right forks 7 attached to the mast 5 so as to be movable up and down via a lift bracket 6, a lift cylinder 8 that moves up and down the forks 7 via the lift bracket 6, and a tilt cylinder 9 that tilts the mast 5.

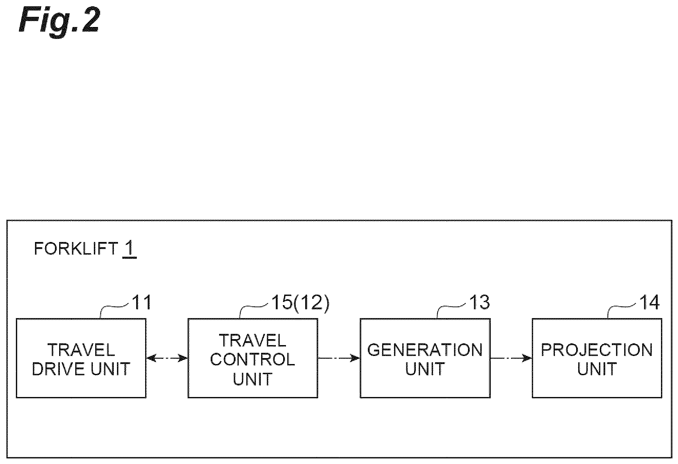

FIG. 2 is a block diagram illustrating functional components of the industrial vehicle illustrated in FIG. 1. As illustrated in FIG. 2, the forklift 1 includes a travel drive unit 11, a travel control unit 12, a generation unit 13, and a projection unit 14.

The travel drive unit 11 is a drive unit that causes the forklift 1 to travel. The travel drive unit 11 includes, for example, a travel motor, a steering motor, and the like. Although not illustrated, the forklift 1 includes a lift drive unit in addition to the travel drive unit 11. The lift drive unit is a drive unit that extends and contracts the lift cylinder 8. The lift drive unit includes, for example, an electromagnetic control valve disposed between a hydraulic pump and the lift cylinder 8.

The travel control unit 12 is a unit that controls the travel of the forklift 1. Physically, the travel control unit 12 is a computer system including a CPU, a RAM, a ROM, an input/output interface, and the like. The travel control unit 12 controls the travel drive unit 11 on the basis of manipulation operating data from a driver of the forklift 1 in the case of manual travel and on the basis of operating data input in advance in the case of automatic travel to cause the forklift 1 to travel. In addition, the travel control unit 12 also functions as a detection unit 15 that detects a traveling direction and a traveling speed of the own vehicle. The travel control unit 12 as the detection unit 15 detects the traveling direction and the traveling speed of the own vehicle while controlling the travel drive unit 11, and outputs information (detection result information) indicating the detection result to the generation unit 13.

The generation unit 13 is a unit that generates an animation image 21 to be displayed on a road surface G by the projection unit 14. Similarly to the travel control unit 12, the generation unit 13 is physically a computer system including a CPU, a RAM, a ROM, an input/output interface, and the like. The animation image 21 generated by the generation unit 13 includes display information for notifying a person around the forklift 1 of various information, and is an image in which the display information has motion. In the present embodiment, the generation unit 13 generates the animation image 21 for attracting attention of the person around the forklift 1 to the presence of the forklift 1 when the forklift 1 moves backward. The generation unit 13 outputs the generated animation image 21 to the projection unit 14.

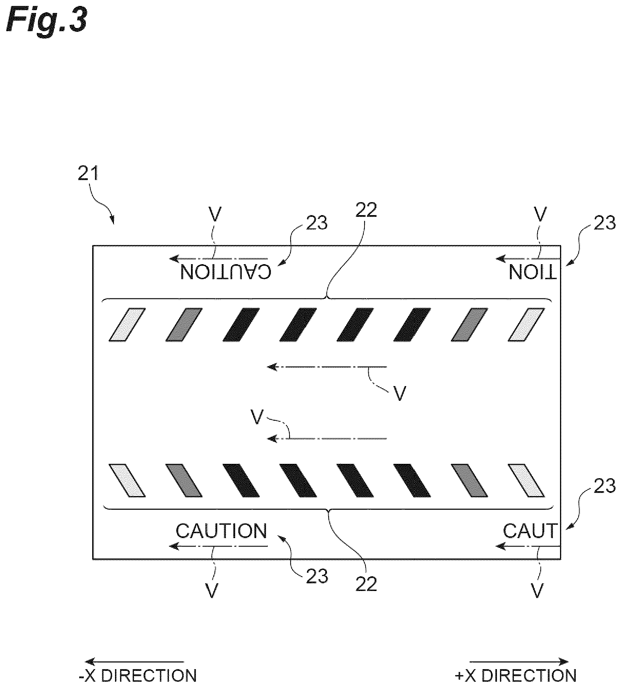

FIG. 3 is a diagram illustrating an example of the animation image 21 generated by the generation unit 13. The animation image 21 illustrated in FIG. 3 includes, as display information, a plurality of colored marks 22 having a parallelogram shape and indicating a travel trajectory of the forklift 1. Here, the marks 22 are arranged, for example, in two rows so as to have an interval corresponding to a tread width of the forklift 1, and the marks 22 in each row are arranged in a straight line in a state of being separated from each other. In addition, the display information may include character information. The content of the character information is arbitrary, but in the animation image 21 illustrated in FIG. 3, a character string 23 of "CAUTION" is arranged at regular intervals along an arrangement direction of the marks in each row.

In setting the motion of the display information in the animation image 21, the generation unit 13 refers to the detection result information of the traveling direction and the traveling speed output from the travel control unit 12. Then, the generation unit 13 generates the animation image 21 such that the display information moves in a direction opposite to the traveling direction indicated by the detection result information and at the same speed as the traveling speed indicated by the detection result information. In the example of FIG. 3, assuming that the traveling direction of the forklift 1 is a +X direction (the right direction in the drawing of FIG. 3) and the traveling speed of the forklift 1 is V km/h, the mark 22 and the character string 23 in the animation image 21 move in a -X direction (the left direction in the drawing of FIG. 3) at the speed V km/h.

In addition, the generation unit 13 may generate the animation image 21 such that the transparency of the display information at the end in the traveling direction of the forklift 1 increases toward the end. In the example of FIG. 3, in the marks 22 in each row arranged in a straight line, the transparency of the four marks 22 on the center side is 0%, the transparency of the marks 22 located second from both ends is 40%, and the transparency of the marks 22 at both ends is 80%.

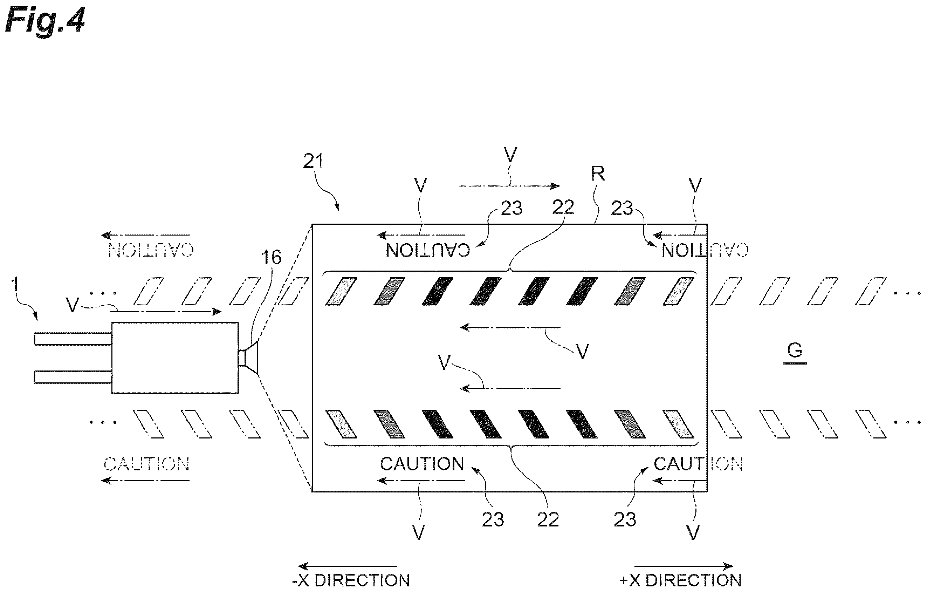

The projection unit 14 is a unit that projects the animation image 21 onto a predetermined projection area R on the road surface around the own vehicle. The projection unit 14 includes, for example, a projector 16 attached to the vehicle body 2. Here, as illustrated in FIG. 4, the projector 16 is attached to the rear portion of the vehicle body 2, and forms the projection area R having a rectangular shape on the road surface G behind the forklift 1. The projection area R has, for example, a rectangular shape having a long side in a front-rear direction of the forklift 1 and a short side in a width direction of the forklift 1.

The projection unit 14 projects the animation image 21 received from the generation unit 13 onto the projection area R. At this time, as described above, in the animation image 21, the display information moves at the traveling speed of the forklift 1 in the direction opposite to the traveling direction of the forklift 1. For this reason, to the forklift 1 moving backward at the speed V km/h, the display information such as the mark 22 and the character string 23 appears to move at the speed V km/h toward the own vehicle in the projection area R.

On the other hand, to a person around the forklift 1 (for example, a person who is stationary on the road surface G), the display information such as the mark 22 and the character string 23 appears to be fixed to the road surface G in the projection area R. Since the projection area R moves along with the travel of the forklift 1, the appearance of the animation image 21 from the person around the forklift 1 is as if the display information such as the mark 22 and the character string 23 is printed in advance on the road surface G, and the display information printed on the road surface G becomes visible only in the projection area R moving together with the forklift 1.

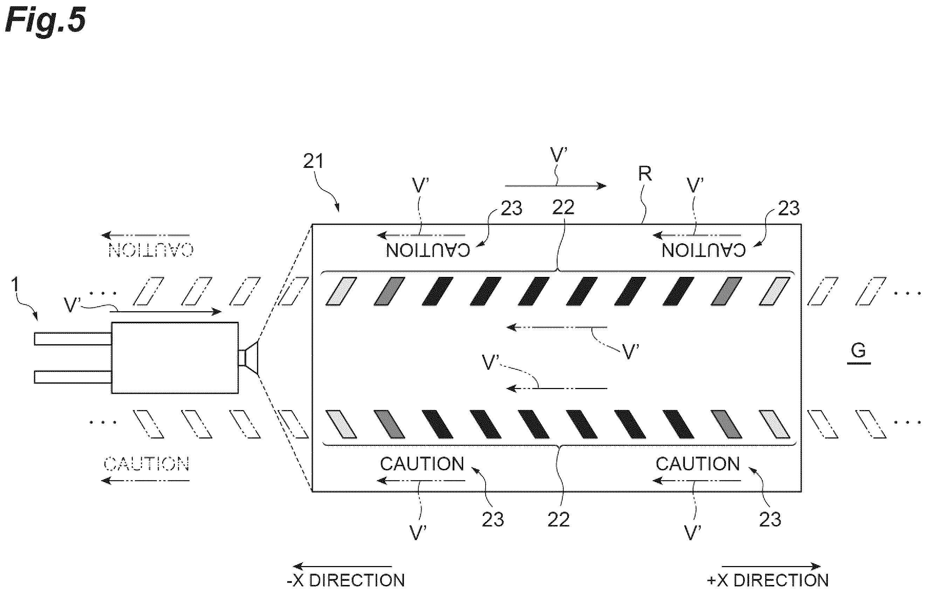

As illustrated in FIG. 5, the projection unit 14 may set the projection area R such that the animation image 21 is projected longer in the traveling direction as the traveling speed of the forklift 1 increases. In this case, the detection result information indicating the detection result of the traveling direction and the traveling speed of the own vehicle may be output from the travel control unit 12 to the projection unit 14, and the projection unit 14 may extend the projection area R in the traveling direction on the basis of the detection result information received from the travel control unit 12.

In the example of FIG. 5, the traveling speed of the forklift 1 is increased from V km/h to V' km/h. Accordingly, the projection area R extends forward in the traveling direction of the forklift 1 by a length that is as large as about two marks 22. The mark 22 and the character string 23 in the animation image 21 move at the speed V' km/h in the -X direction (the left direction in the drawing of FIG. 3) in the extended projection area R.

Note that in the example of FIG. 5, the projection area R extends forward in the traveling direction of the forklift 1. However, the projection area R only needs to extend along the traveling direction of the forklift 1. The projection area R may extend backward in the traveling direction, or may extend both forward and backward in the traveling direction.

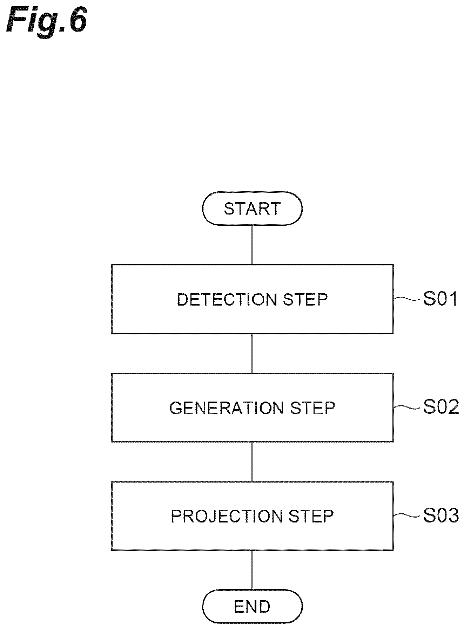

FIG. 6 is a flowchart illustrating an image projection method according to one embodiment. As illustrated in FIG. 6, the image projection method includes a detection step (step S01), a generation step (step S02), and a projection step (step S03). In the present embodiment, the image projection method is executed as the action of the forklift 1 described above.

The detection step S01 is a step of detecting the traveling direction and the traveling speed of the own vehicle. In the detection step S01, the travel control unit 12 that controls the travel drive unit 11 detects the traveling direction and the traveling speed of the forklift 1, and outputs the detected traveling direction and traveling speed to the generation unit 13.

The generation step S02 is a step of generating the animation image 21 in which the display information moves at the traveling speed in the direction opposite to the traveling direction. In the generation step S02, the generation unit 13 generates the animation image 21 in which the display information moves at the traveling speed in the direction opposite to the traveling direction of the forklift 1 on the basis of the traveling direction and the traveling speed detected in the detection step S01, and outputs the animation image to the projection unit 14.

The projection step S03 is a step of projecting the animation image 21 onto the predetermined projection area R on the road surface G around the own vehicle. In the projection step S03, the projection unit 14 projects the animation image 21 generated in the generation step S02 onto the projection area R of the road surface G. As a result, in the projection area R, the display information is projected in a state as if the display information is fixed to the road surface G.

As described above, the forklift 1 projects, onto the predetermined projection area R on the road surface G around the own vehicle, the animation image 21 in which the display information moves at the traveling speed of the own vehicle in the direction opposite to the traveling direction of the own vehicle. As a result, to the person around the own vehicle, the display information appears to be fixed to the road surface G in the projection area R where the animation image 21 is projected. Therefore, the forklift 1 can project, onto the road surface, the display information that is easily recognized by the person around the vehicle.

In the present embodiment, the projection unit 14 projects the animation image 21 onto the road surface G in the traveling direction. As a result, it is possible to more effectively call attention to the travel of the vehicle to the person around the own vehicle.

In the present embodiment, the generation unit 13 generates the animation image 21 such that the transparency of the display information at the end in the traveling direction increases toward the end. As a result, since the display information gradually appears and gradually disappears in the projection area R, it is possible to reduce a sense of discomfort when the person around the vehicle sees the display information projected onto the road surface G.

In the present embodiment, the projection unit 14 sets the projection area R such that the animation image 21 is projected longer in the traveling direction as the traveling speed of the own vehicle increases. As a result, since the display information is displayed long in the traveling direction according to the traveling speed of the own vehicle, it is possible to more effectively call attention to the travel of the vehicle to the person around the own vehicle.

In the present embodiment, the generation unit 13 generates the animation image including character information as display information. As a result, it is possible to directly call attention to the travel of the vehicle to the person around the own vehicle by the character information.

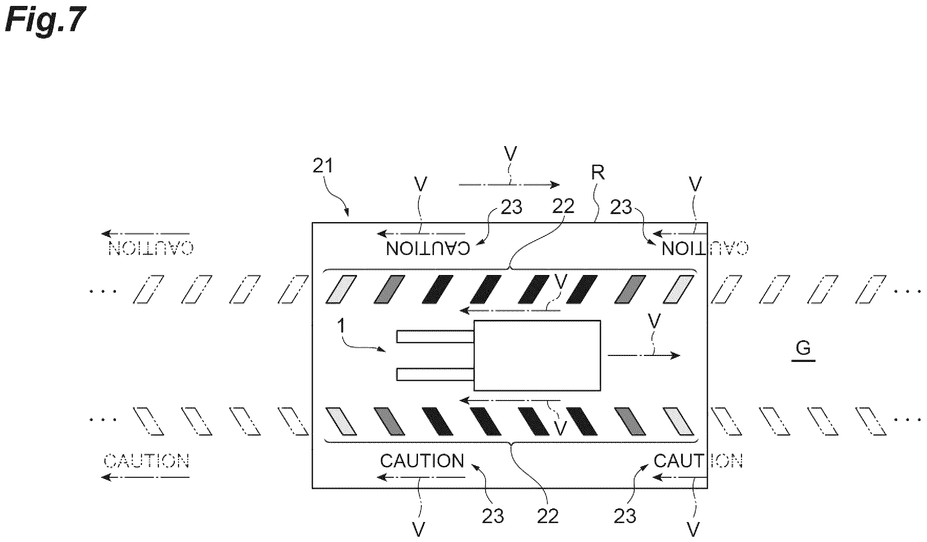

The present invention is not limited to the above embodiments. For example, in the above embodiment, the projection area R is formed on the road surface G behind the forklift 1 when the forklift 1 moves backward, but the projection area R may be formed at any position on the road surface around the own vehicle. For example, the projection area R may be formed on the road surface G in front of the forklift 1 when the forklift 1 moves forward. As illustrated in FIG. 7, the projection area R may be formed in an area including the forklift 1 at least one of when the forklift 1 moves forward and when the forklift 1 moves backward. During the turning travel of the forklift 1, the projection area R curved in accordance with the trajectory of the forklift 1 predicted from a steering angle and the traveling speed may be formed.

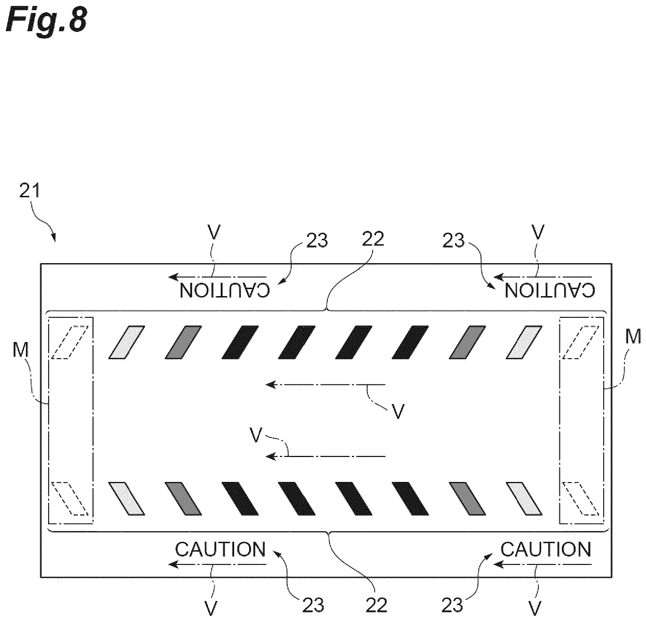

In addition, in the above embodiment, the projection unit 14 sets the projection area R such that the animation image 21 is projected longer in the traveling direction as the traveling speed of the forklift 1 increases. However, as illustrated in FIG. 8, a mode may be adopted in which the display area of the animation image 21 in the projection area R is adjusted using a mask M without changing the size of the projection area R itself. In this case, for example, by adopting the mask M in the vicinity of the end in the traveling direction in the projection area R and reducing the width (width in the traveling direction) of the mask M as the traveling speed of the forklift 1 increases, the animation image 21 can be projected longer in the traveling direction according to the traveling speed of the forklift 1.

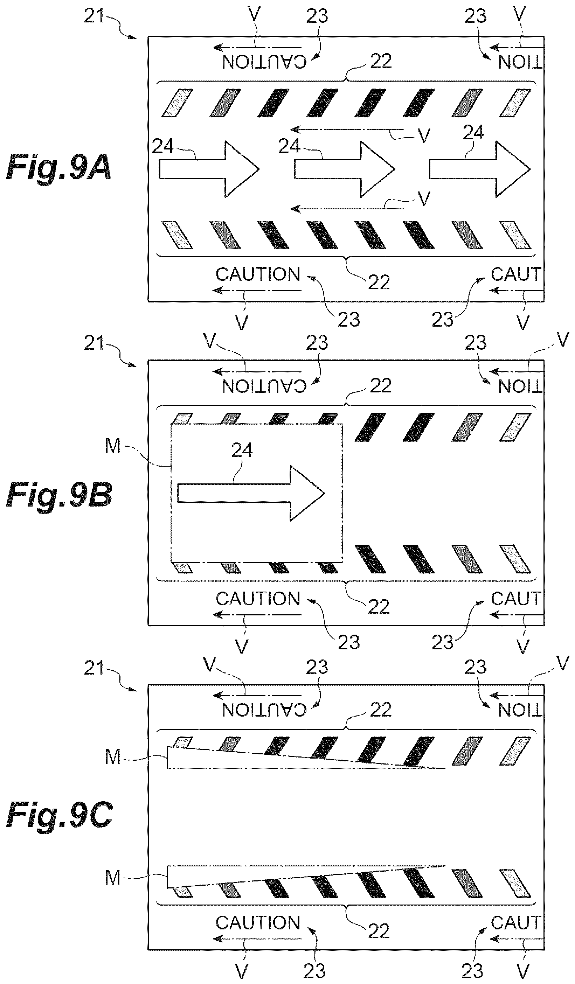

Various modes can be adopted also for the animation image 21 generated by the generation unit 13. For example, as illustrated in FIG. 9A, the animation image 21 having, as display information, the plurality of marks 22 arranged in two rows and an arrow 24 arranged between the marks 22 in the rows may be used. The arrow 24 may move in the same direction and at the same speed as the mark 22 and the character string 23, or may be stationary. In addition, as illustrated in FIG. 9B, in order to highlight the arrow 24, the mask M having a rectangular shape or the like may be set around the arrow 24, and the mark 22 in a portion overlapping the mask M may not be displayed. As illustrated in FIG. 9C, the mask M having a triangular shape or the like may be set so as to overlap the marks 22 in each row, and the length (length in a vehicle width direction of the forklift 1, for example) of the mark 22 in each row may become longer as the distance from the forklift 1 increases.

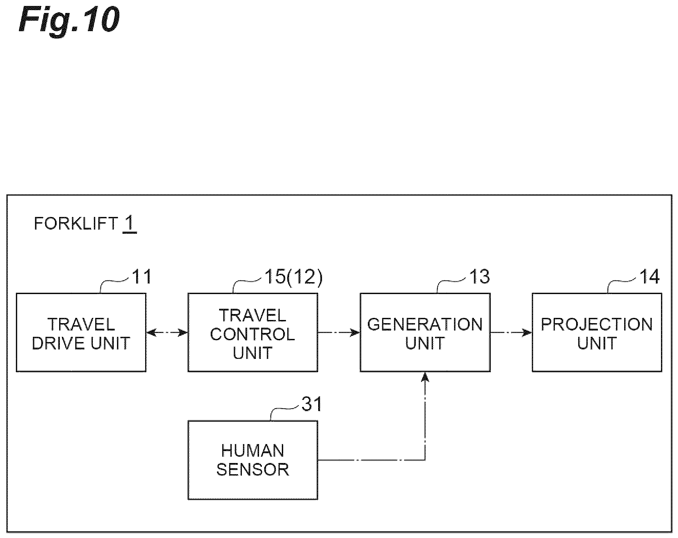

Further, as illustrated in FIG. 10, the forklift 1 may include a human sensor 31 that senses the presence of the person around the own vehicle. In this case, when the human sensor 31 senses the presence of the person around the forklift 1, the generation unit 13 may generate the animation image 21 in which the display information is emphasized more than usual. The method of emphasizing the display information is not particularly limited, and examples thereof include blinking of the mark 22, the arrow 24, or the character information, a change to a warning color such as red, and a change in color tone.

In the above embodiments, the forklift 1 is exemplified as the industrial vehicle, but the industrial vehicle to which the present invention is applied is not limited to the forklift, and can be widely applied to other manned transport vehicles, unmanned transport vehicles capable of autonomous traveling, transport robots capable of autonomous traveling, towing vehicles, and the like.

## Claims

1. An industrial vehicle (1) comprising:
a detection unit (12, 15) configured to detect a traveling direction and a traveling speed of the own vehicle;
a generation unit (13) configured to generate an animation image (21) in which display information (22, 23) moves at the traveling speed in a direction opposite to the traveling direction; and
a projection unit (14) configured to project the animation image onto a predetermined projection area on a road surface around the own vehicle wherein the display information (22, 23) appears, to a person around the own vehicle, to be fixed to the road surface in the predetermined projection area.

2. The industrial vehicle (1) according to claim 1, wherein the projection unit (14) is configured to project the animation image (21) onto the road surface in the traveling direction.

3. The industrial vehicle (1) according to claim 1 or 2, wherein the generation unit (13) is configured to generate the animation image (21) such that transparency of the display information (22, 23) at an end in the traveling direction increases toward the end.

4. The industrial vehicle (1) according to claim 1 or 2, wherein the projection unit (14) is configured to set the projection area such that the animation image (21) is projected longer in the traveling direction as the traveling speed increases.

5. The industrial vehicle (1) according to claim 1 or 2, wherein the generation unit (13) is configured to generate the animation image (21) including character information as the display information (22, 23).

6. The industrial vehicle (1) according to claim 1 or 2, further comprising
a human sensor (31) configured to sense presence of a person around the own vehicle, wherein
the generation unit (13) is configured to generate the animation image (21) in which the display information (22, 23) is emphasized when the human sensor (31) senses the presence of the person.

7. An image projection method comprising:
a detection step (S01) of detecting a traveling direction and a traveling speed of an own vehicle;
a generation step (502) of generating an animation image (21) in which display information (22, 23) moves at the traveling speed in a direction opposite to the traveling direction; and
a projection step (S03) of projecting the animation image (21) onto a predetermined projection area on a road surface around the own vehicle wherein the display information (22, 23) appears, to a person around the own vehicle, to be fixed to the road surface in the predetermined projection area.

## Patentansprüche

1. Industrielles Fahrzeug (1) mit:
einer Erfassungseinheit (12, 15), die konfiguriert ist, eine Fahrrichtung und eine Fahrgeschwindigkeit des eigenen Fahrzeugs zu erfassen;
einer Erzeugungseinheit (13), die konfiguriert ist, ein Animationsbild (21) zu erzeugen, in dem sich Anzeigeinformationen (22, 23) bei der Fahrgeschwindigkeit in einer Richtung, die entgegengesetzt zu der Fahrrichtung ist, bewegen; und
einer Projektionseinheit (14), die konfiguriert ist, das Animationsbild auf eine vorbestimmte Projektionsfläche auf einer Straßenoberfläche um das eigene Fahrzeug herum zu projizieren, wobei die Anzeigeinformationen (22, 23) einer Person um das eigene Fahrzeug herum als auf der Straßenoberfläche in der vorbestimmten Projektionsfläche fixiert erscheinen.

2. Industrielles Fahrzeug (1) nach Anspruch 1, wobei die Projektionseinheit (14) konfiguriert ist, das Animationsbild (21) auf die Straßenoberfläche in der Fahrrichtung zu projizieren.

3. Industrielles Fahrzeug (1) nach Anspruch 1 oder 2, wobei die Erzeugungseinheit (13) konfiguriert ist, das Animationsbild (21) derart zu erzeugen, dass eine Transparenz der Anzeigeinformationen (22, 23) bei einem Ende in der Fahrrichtung hin zu dem Ende zunimmt.

4. Industrielles Fahrzeug (1) nach Anspruch 1 oder 2, wobei die Projektionseinheit (14) konfiguriert ist, die Projektionsfläche derart einzustellen, dass das Animationsbild (21) länger in der Fahrrichtung projiziert wird, wenn sich die Fahrgeschwindigkeit vergrößert.

5. Industrielles Fahrzeug (1) nach Anspruch 1 oder 2, wobei die Erzeugungseinheit (13) konfiguriert ist, das Animationsbild (21) zu erzeugen, das Zeicheninformationen als die Anzeigeinformationen (22, 23) umfasst.

6. Industrielles Fahrzeug (1) nach Anspruch 1 oder 2, ferner mit
einem Personensensor (31), der konfiguriert ist, eine Anwesenheit einer Person um das eigene Fahrzeug herum zu erfassen, wobei
die Erzeugungseinheit (13) konfiguriert ist, das Animationsbild (21) zu erzeugen, in dem die Anzeigeinformationen (22, 23) hervorgehoben sind, wenn der Personensensor (31) das Vorhandensein der Person erfasst.

7. Bildprojektionsverfahren mit:
einem Erfassungsschritt (S01) zum Erfassen einer Fahrrichtung und einer Fahrgeschwindigkeit eines eigenen Fahrzeugs;
einem Erzeugungsschritt (S02) zum Erzeugen eines Animationsbilds (21), in dem sich Anzeigeinformationen (22, 23) bei der Fahrgeschwindigkeit in einer Richtung, die entgegengesetzt zu der Fahrrichtung ist, bewegen; und
einem Projektionsschritt (S03) zum Projizieren des Animationsbilds (21) auf eine vorbestimmte Projektionsfläche auf einer Straßenoberfläche um das eigene Fahrzeug herum, wobei die Anzeigeinformationen (22, 23) einer Person um das eigene Fahrzeug herum als auf der Straßenoberfläche in der vorbestimmten Projektionsfläche fixiert erscheinen.

## Revendications

1. Véhicule industriel (1) comprenant :
une unité de détection (12, 15) configurée pour détecter une direction de déplacement et une vitesse de déplacement du véhicule propre ;
une unité de génération (13) configurée pour générer une image d'animation (21) dans laquelle des informations d'affichage (22, 23) se déplacent à la vitesse de déplacement dans une direction opposée à la direction de déplacement ; et
une unité de projection (14) configurée pour projeter l'image d'animation sur une zone de projection prédéterminée sur une surface de route autour du véhicule propre, les informations d'affichage (22, 23) apparaissant, pour une personne autour du véhicule propre, afin d'être fixées sur la surface de route dans la zone de projection prédéterminée.

2. Véhicule industriel (1) selon la revendication 1, l'unité de projection (14) étant configurée pour projeter l'image d'animation (21) sur la surface de route dans la direction de déplacement.

3. Véhicule industriel (1) selon la revendication 1 ou 2, l'unité de génération (13) étant configurée pour générer l'image d'animation (21) de telle sorte que la transparence des informations d'affichage (22, 23) à une extrémité dans la direction de déplacement augmente vers l'extrémité.

4. Véhicule industriel (1) selon la revendication 1 ou 2, l'unité de projection (14) étant configurée pour régler la zone de projection de telle sorte que l'image d'animation (21) soit projetée plus longtemps dans la direction de déplacement lorsque la vitesse de déplacement augmente.

5. Véhicule industriel (1) selon la revendication 1 ou 2, l'unité de génération (13) étant configurée pour générer l'image d'animation (21) comprenant des informations de caractère en tant qu'informations d'affichage (22, 23).

6. Véhicule industriel (1) selon la revendication 1 ou 2, comprenant en outre :
un capteur d'être humain (31) configuré pour détecter la présence d'une personne autour du véhicule propre,
l'unité de génération (13) étant configurée pour générer l'image d'animation (21) dans laquelle les informations d'affichage (22, 23) sont accentuées lorsque le capteur d'être humain (31) détecte la présence de la personne.

7. Procédé de projection d'image comprenant :
une étape de détection (S01) destinée à détecter une direction de déplacement et d'une vitesse de déplacement d'un véhicule propre ;
une étape de génération (S02) destinée à générer une image d'animation (21) dans laquelle des informations d'affichage (22, 23) se déplacent à la vitesse de déplacement dans une direction opposée à la direction de déplacement ; et
une étape de projection (S03) de l'image d'animation (21) sur une zone de projection prédéterminée sur une surface de route autour du véhicule propre, les informations d'affichage (22, 23) apparaissant, pour une personne autour du véhicule propre, à être fixées à la surface de route dans la zone de projection prédéterminée.
